# EUROPÄISCHE PATENTANMELDUNG

(11) **EP 1 014 555 A2**
(43) Veröffentlichungstag der Anmeldung: **28.06.2000**
(21) Anmeldenummer: 99125164.6
(22) Anmeldetag: 17.12.1999
(51) Int. Cl.: H02P 6/18

(54) **Verfahren zur Überwachung der Drehzahl eines Synchronmotors und Vorrichtung zur Überwachung der Drehzahl eines derartigen Motors**

(30) Priorität: 23.12.1998 DE 19860110
(71) Anmelder: Mannesmann VDO Aktiengesellschaft, 60388 Frankfurt am Main (DE)
(72) Erfinder: Kronenberg, Klaus, 65843 Sulzbach (DE)
(74) Vertreter: Klein, Thomas, Dipl.-Ing.

(57) **Zusammenfassung**

Die Erfindung betrifft ein Verfahren zur Überwachung der Drehzahl eines Synchronmotors, wobei der Synchronmotor einen permanentmagnetischen Rotor (3) und Spulen (1, 2) aufweist, wobei die Spulen 1, 2 mit sinusförmigen Strömen bestromt werden.

Weiterhin betrifft er eine Vorrichtung zur Überwachung der Drehzahl eines derartigen Motors, wobei bei mindestens einer der Spulen (1, 2) die Stromversorgung unterbrochen und ein oder mehrere Spannungsverläufe (U1, U2) ausgewertet werden, die durch den permanentmagnetischen Rotor (3) in einer oder mehreren der von der Stromversorgung unterbrochenen Spulen (1, 2) induziert wird, wobei die Mindestdauer der Unterbrechung der Stromversorgung der Spulen (1, 2) und Auswertung des Spannungsverlaufs (U1, U2) gleich ist dem zeitlichen Abstand zweier aufeinanderfolgenden Nulldurchgänge der jeweils induzierten Spannungsverläufe ( U1, U2).

## Beschreibung

Die Erfindung betrifft ein Verfahren zur Überwachung der Drehzahl eines Synchronmotors, wobei der Synchronmotor einen permanentmagnetischen Rotor und Spulen aufweist, wobei die Spulen mit sinusförmigen Strömen bestromt werden, und eine Vorrichtung zur Überwachung der Drehzahl eines derartigen Motors.

Bei Synchronmotoren werden mittels der bestromten Spulen magnetische Drehfelder erzeugt, die den permanentmagnetischen Rotor in eine Drehbewegung versetzen, wobei die Drehzahlen von Magnetfeld und Rotor gleich sind. Zur Überwachung der Drehzahl des Rotors sind Sensoren bekannt, die die Stellung des Rotors magnetisch oder optisch erfassen. Diese Sensoren benötigen zusätzlichen Bauraum und bedeuten insgesamt einen höheren Herstellungsaufwand des Motors.

Aufgabe der Erfindung ist es daher, ein Verfahren zur Überwachung der Drehzahl anzugeben, bei dem auf einen zusätzlichen Bauraum und einen höheren Herstellungsaufwand des Motors verzichtet werden kann. Weiterhin soll eine entsprechende Vorrichtung angegeben werden.

Diese Aufgaben werden zum einen durch ein Verfahren gelöst, bei dem bei mindestens einer der Spulen die Stromversorgung unterbrochen und ein Spannungsverlauf ausgewertet wird, der durch den Rotor in der oder einer oder mehrerer der nicht mit Strom versorgten Spulen induziert wird, wobei die Mindestdauer der Unterbrechung der Stromversorgung und Auswertung des Spannungsverlaufs gleich ist dem zeitlichen Abstand zweier aufeinanderfolgender Nulldurchgänge der jeweils durch den Rotor induzierten Spannung.

Bei einer erfindungsgemäßen Vorrichtung zur Überwachung der Drehzahl eines vorbeschriebenen Synchronmotors ist die Stromversorgung mindestens einer Spule unterbrechbar und ist eine Auswerteschaltung vorhanden, in der durch Auswertung der Spannungsverläufe, die durch den permanentmagnetischen Rotor in den von den Stromversorgung unterbrochenen Spulen induziert werden, die Drehzahl des Rotors ermittelbar ist.

Vorteilhafte Ausgestaltungen des Verfahrens und der Vorrichtung sind den Unteransprüchen und der nachfolgenden Beschreibung zu entnehmen.

Besonders einfach gestaltet sich das Auswerteverfahren, wenn die von der Stromversorgung unterbrochenen Spulen von der Stromversorgung getrennt werden.

Dadurch, daß jeweils zwei aufeinanderfolgende Messungen des Spannungsverlaufs in einer Spule oder zeitversetzte Messungen der Spannungsverläufe in mehreren Spulen während einer Stromversorgungsunterbrechung durchgeführt werden, läßt sich die Verzögerung des nicht angetriebenen oder teilweise nicht angetriebenen permanentmagnetischen Rotors ermitteln.

Aus dieser Verzögerung lassen sich dann die Drehzahl und die Lage des permanentmagnetischen Rotors für einen nachfolgenden Zeitpunkt bestimmen und so die Spulen wieder optimal mit der richtigen Frequenz und richtigen Phasenlage des Stroms ansteuern.

Eine erfindungsgemäße Vorrichtung ist besonders einfach auszuführen, wenn mindestens ein Umschalter vorhanden ist, mit dem eine oder mehrere Spulen von der Stromversorgungseinheit trennbar und mit der Auswerteschaltung verbindbar ist bzw. sind.

Die Erfindung wird nachfolgend anhand der Figuren für ein besonders bevorzugtes Ausführungsbeispiel näher erläutert.

Es zeigen:
- Figur 1:: Einen Synchronmotor mit einem Ausführungsbeispiel einer erfindungsgemäßen Vorrichtung.
- Figur 2:: Ein beispielhaftes Ablaufdiagramm des erfindungsgemäßen Verfahrens.
- Figur 3:: Einen Spannungsverlauf, der durch den permanentmagnetischen Motor in den Spulen des Synchronmotors aus Figur 1 erzeugt wird.

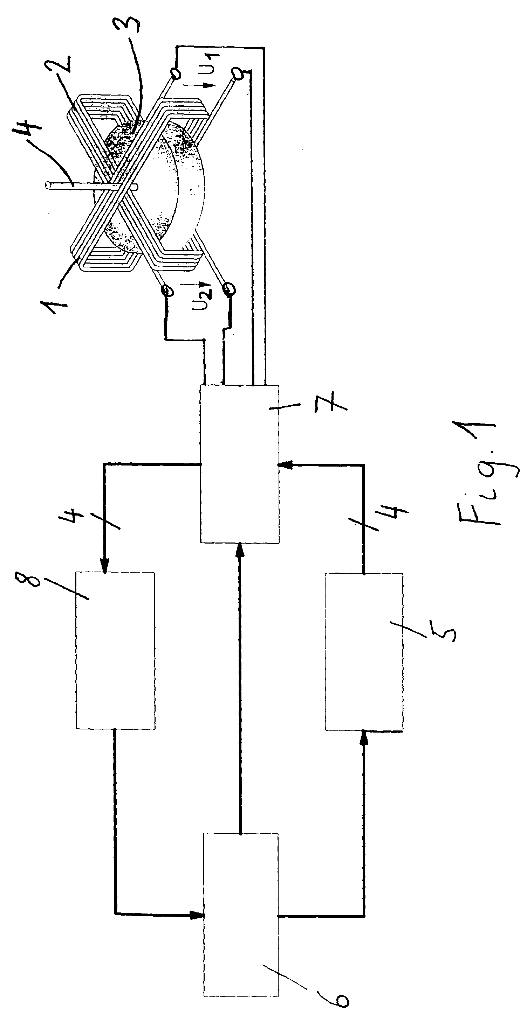

In Figur 1 sind von einem Synchronmotor Spulen 1, 2, ein permanentmagnetischer Rotor 3 mit Rotorwelle 4, eine Stromversorgungseinheit 5 und eine Steuereinheit 6 dargestellt. Weiterhin sind in Figur 1 ein besonders bevorzugter Umschalter 7 und eine besonders bevorzugte Auswerteschaltung 8 dargestellt. Die für den permanentmagnetischen Rotor 3 bzw. Rotorwelle 4 erforderlichen Lager sind nicht dargestellt. Der permanentmagnetische Rotor 3 ist diametral magnetisiert. Die Stromversorgungseinheit 5 versorgt die Spulen 1, 2 über den Umschalter 7 mit jeweils einem sinusförmigen Strom, wobei die beiden Ströme um 90° phasenverschoben sind. So wird ein Magnetfeld erzeugt, daß sich um die Achse des permanentmagnetischen Rotors 3 mit der Frequenz der beiden Ströme dreht und den permanentmagnetischen Rotor 3 derart antreibt, daß er dieselbe Drehzahl wie das Magnetfeld aufweist, wenn das Drehmoment, die das Magnetfeld auf den permanentmagnetischen Motor 3 ausübt größer ist als die der Drehung des Rotors 3 entgegengesetzten Drehmomente, die auf dem permanentmagnetischen Rotor 3 einwirken, beispielsweise nicht dargestellte Vorrichtungen, die von dem permanentmagnetischen Rotor 3 über die Rotorwelle 4 angetrieben werden, wie z. B. ein Getriebe oder ein auf die Rotorwelle 4 aufgesetztes Lüfterrad.

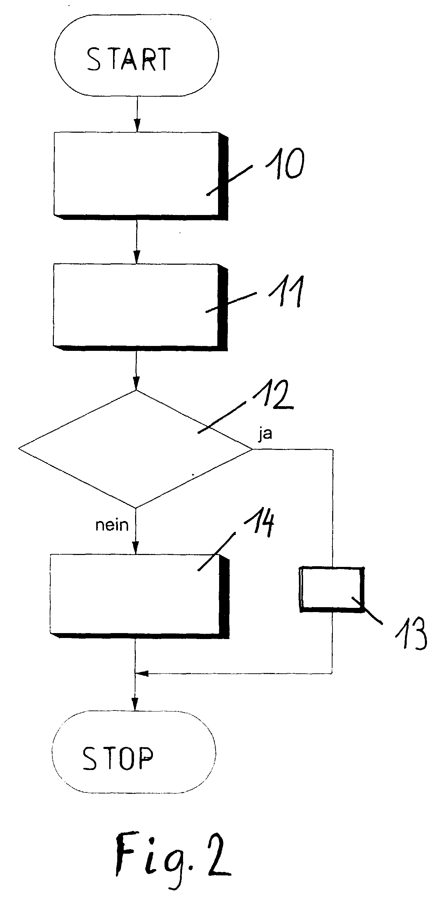

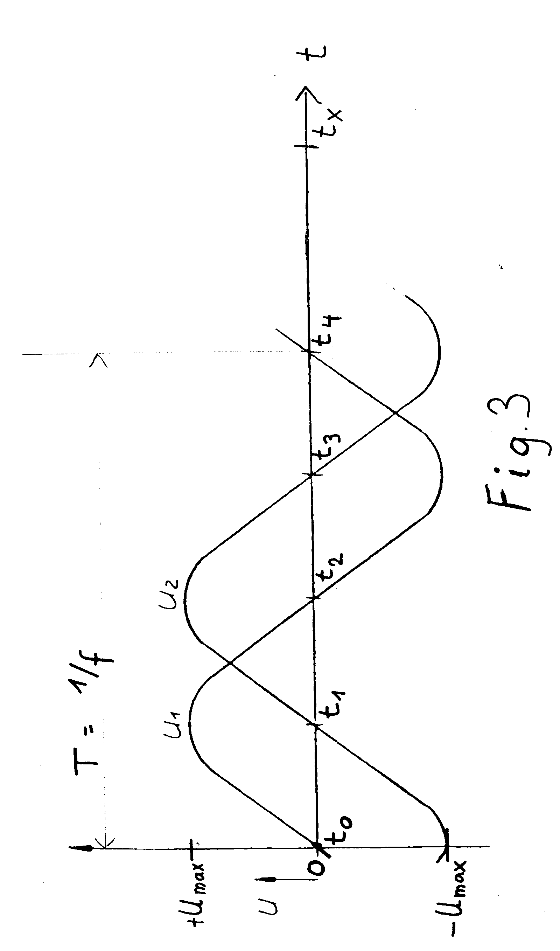

In Figur 2 werden zum Messen der Drehzahl in Block 10 die Spulen 1, 2 von der Stromversorgungseinheit 5 getrennt und mit der Auswerteschaltung 8 verbunden. Der permanentmagnetische Rotor 3 dreht sich aufgrund seiner Trägheit weiter und induziert durch seine Drehung in den Spulen 1, 2 jeweils einen Spannungsverlauf U1 bzw. U2, deren Verläufe beispielhaft in Figur 3 dargestellt sind. Die Spannungsverläufe U1, U2 sind für einen Motor mit hohen Trägheitsmoment für eine Umdrehung dargestellt, so daß optisch eine Verzögerung durch einen allmählich gestreckteren Kurvenverlauf während dieser einen Umdrehung nicht feststellbar ist. In Block 11 wird die Drehzahl erfaßt: In der Auswerteschaltung 8 wird beispielsweise nur der Spannungsverlauf U1 der Spule 1 ausgewertet: Zunächst wird die Zeitdauer von dem ersten Nulldurchgang zum Zeitpunkt t₀ bis zu dem zweiten Nulldurchgang bei t₂ ermittelt. Der Kehrwert dieser Zeit entspricht der doppelten durchschnittlichen Drehzahl des permanentmagnetischen Rotors 3 zwischen den Zeitpunkten t₀ und t₂. Dann wird in Block 12 ermittelt ob die durchschnittliche Drehzahl der Solldrehzahl entspricht, wenn ja steuert die Steuereinheit 6 den Umschalter 7 so, daß die Spulen 1, 2 wieder mit der Stromversorgungseinheit 5 verbunden werden. Wenn nein wird in Block 14 durch die Auswerteschaltung 8 die Zeitdauer von dem zweiten Nulldurchgang bei t₂ bis zu dem dritten Nulldurchgang bei t₄ ermittelt. Der Kehrwert dieser Zeitdauer entspricht der durchschnittlichen Drehzahl des permanentmagnetischen Rotors 3 zwischen den Zeitpunkten t₂ und t₄ . Aus der Abnahme der Drehzahl und dem Zeitunterschied zwischen t₀ und t₂ kann die Verzögerung des nicht angetriebenen permanentmagnetischen Rotors 3 ermittelt werden. So ist es dann möglich, die Stellung und Drehgeschwindigkeit des permnanentmagnetischen Rotors 3 für einen nachfolgenden Zeitpunkt tₓ zu bestimmen, wobei der Zeitpunkt tₓ so gewählt wird, daß die vollständige Berechnung abgeschlossen ist und so die Spulen 1, 2 über die Stromversorgungseinheit 1 und den Umschalter 7 mit jeweils einem Strom der richtigen Frequenz und Phasenlage angesteuert werden können. Danach kann der Motor allmählich auf die gewünschte Drehzahl gesteuert werden.

Der Zeitraum für die Ermittlung der Verzögerung kann verkürzt werden, wenn zusätzlich der in Spule 2 induzierte Spannungsverlauf U2 ausgewertet wird. So kann beispielsweise der Spannungsverlauf U1 der Spule 1 zwischen den Zeitpunkten t₀ und t₂ und der Spannungsverlauf U2 der Spule 2 von t₁ bis t₃ ausgewertet werden, daraus die durchschnittlichen Drehzahlen bestimmt werden und aus der Differenz der Drehzahlen und dem Zeitunterschied (im Beispielsfall t₁ minus t₀) die Verzögerung des nicht angetriebenen permanentmagnetischen Rotors 3 bestimmt werden, so daß bereits nach dem Zeitpunkt t₃ die Verzögerung des permanentmagnetischen Rotors 3 aus den beiden durchschnittlichen Drehzahlen bestimmt werden kann.

Die durchschnittliche Drehzahl des Rotors 3 kann auch dadurch ermittelt werden, daß die Zeitdauer ermittelt wird, die ein Spannungsverlauf U1 bzw. U2 benötigt, bis er von einem ersten Spannungswert erstmalig bis zu einem zweiten Spannungswert gelangt, der den selben Betrag wie der erste Spannungswert aber ein entgegengesetztes Vorzeichen aufweist. So kann zu jedem Zeitpunkt mit der Ermittlung der durchschnittlichen Drehzahl begonnen werden und so die Zeitdauer der Ermittlung noch verkürzt werden. Ebenso läßt sich dann aus zwei zeitversetzt ermittelten durchschnittlichen Drehzahlen die Verzögerung bestimmen, wobei entweder nur einer der Spannungsverläufe U1, U2 oder beide der Spannungsverläufe U1, U2 ausgewertet werden.

Es ist auch möglich, für jede Messung der durchschnittlichen Drehzahl eine vollständige Drehung des Rotors 3, also beispielsweise von den Zeitpunkten t₀ bis t₄ , oder ein Mehrfaches davon zu verwenden. Die Messung dauert aber dann länger und kann ungenauer werden.

## Patentansprüche

1. Verfahren zur Überwachung der Drehzahl eines Synchronmotors, wobei der Synchronmotor einen permanentmagnetischen Rotor und mehrere Spulen aufweist, die mit sinusförmigen Strömen bestromt werden und wobei der Winkelabstand der sinusförmigen Ströme zueinander dem Winkelabstand der Spulen zueinander entspricht, **dadurch gekennzeichnet,** daß bei mindestens einer der Spulen (1, 2) die Stromversorgung unterbrochen und ein oder mehrere Spannungsverläufe (U1, U2) ausgewertet werden, die durch den permanentmagnetischen Rotor (3) in einer oder mehreren der von der Stromversorgung unterbrochenen Spulen (1, 2) induziert wird, wobei die Mindestdauer der Unterbrechung der Stromversorgung der Spulen (1, 2) und Auswertung des Spannungsverlaufs (U1, U2) gleich ist dem zeitlichen Abstand zweier aufeinanderfolgenden Nulldurchgänge der jeweils induzierten Spannungsverläufe ( U1, U2).

2. Verfahren nach Anspruch 1, dadurch gekennzeichnet, daß die von der Stromversorgung unterbrochenen Spulen (1, 2) von der Stromversorgung getrennt werden.

3. Verfahren nach Anspruch 1 oder 2, **dadurch gekennzeichnet,** daß aus zwei hintereinander liegenden Messungen in einer Spule(1, 2) oder zeitversetzten Messungen in einer oder mehreren Spulen (1, 2) die Verzögerung des nicht oder teilweise nicht angetriebenen permanentmagnetischen Rotors (3) ermittelt wird.

4. Verfahren nach Anspruch 3, **dadurch gekennzeichnet,** daß aus dem induzierten Spannungsverlauf (U1, U2) und der ermittelten Verzögerung des permanentmagnetischen Rotors (3) die Lage und Drehzahl des permanentmagnetischen Rotors (3) für einen nachfolgenden Zeitpunkt (tₓ) vorausbestimmt werden.

5. Verfahren nach Anspruch 4, **dadurch gekennzeichnet,** daß die Bestromung der Spulen (1, 2) entsprechend der vorausbestimmten Drehzahl und Lage des Rotors (3) angepaßt wird.

6. Vorrichtung zur Überwachung der Drehzahl eines Synchronmotors, der einen permanentmagnetischen Rotor und mehrere Spulen aufweist, die von einer Stromversorgungseinheit, mit sinusförmigen Strömen versorgbar sind, **dadurch gekennzeichnet,** daß die Stromversorgung mindestens einer der Spulen (1, 2) unterbrechbar ist und eine Auswerteschaltung (8) vorhanden ist, wobei in der Auswerteschaltung (8) die Drehzahl des permanentmagnetischen Rotors (3) ermittelbar ist durch eine Auswertung der Spannungsverläufe (U1, U2), die in den von der Stromversorgung unterbrochenen Spulen durch den permanentmagnetischen Rotor (3) induziert werden.

7. Vorrichtung nach Anspruch 6, **dadurch gekennzeichnet,** daß mindestens ein Umschalter (7) vorhanden ist, durch den die von der Stromversorgung unterbrochen Spulen (1, 2) von der Stromversorgungseinheit (5) trennbar und mit der Auswerteschaltung (8) verbindbar sind

8. Vorrichtung nach Anspruch 6 oder 7, **dadurch gekennzeichnet,** daß mit der Auswerteschaltung (8) die Verzögerung des permanentmagnetischen Rotors (3) ermittelbar ist.

9. Vorrichtung nach Anspruch 8, **dadurch gekennzeichnet,** daß mit der Auswerteschaltung (8) die Stellung und Drehzahl für einen nachfolgenden Zeitpunkt (tₓ) vorausbestimmbar ist.

10. Vorrichtung nach Anspruch 9, **dadurch gekennzeichnet,** daß die Bestromung der Spulen (1, 2) entsprechend der vorausbestimmten Drehzahl und Lage des permanentmagnetischen Rotors (3) anpaßbar ist.
